Europäisches Patentamt

European Patent Office

Office européen des brevets

(19)

(11) Publication number: **0 166 833**

**A1**

(12) # EUROPEAN PATENT APPLICATION

(21) Application number: 84308345.2

(22) Date of filing: 30.11.84

(51) Int. Cl.⁴: **A 01 G 9/14**
**F 16 B 5/06, E 06 B 3/28**

(30) Priority: 01.12.83 GB 8332116
21.02.84 GB 8404500
20.07.84 GB 8418567

(43) Date of publication of application:
08.01.86 Bulletin 86/2

(84) Designated Contracting States:
AT BE CH DE FR GB IT LI LU NL SE

(71) Applicant: MORTIMER TECHNOLOGY LIMITED
47 Castle Street Mortimer Hill
Mortimer Reading Berks RG7 3PG(GB)

(72) Inventor: Dodson, Christopher Edward
Mortimer Hill Mortimer
Reading Berks RG7 3PG(GB)

(74) Representative: Wright, Peter David John et al,
R.G.C. Jenkins & Co. 12-15, Fetter Lane
London EC4A 1PL(GB)

(54) Fastening device and method of securing a flexible sheet to a support.

(57) A fastening device for attaching a sheet (16) of flexible material to a support (12) and comprising a first part (10) mountable on the support (12) and a second part (14) engageable with the first part (10) characterised in that the second part (14) is attachable to the sheet (16) of material and is configured so as to be movable relative to the first part (10) when they are engaged, and in that the first part (10) is adapted to move relative to the support (12) whereby a force applied to the two engaged parts (10, 14) moving them in one direction relative to the support (12) causes the second part (14) to move relative to the first part (10) generally transversely with respect to said one direction.

Fig. 3.

TITLE MODIFIED
see front page

0166833

## FASTENING DEVICE AND METHOD

This invention concerns a fastening device and method which may advantageously be employed in securing flexible material to and tensioning the material on a frame.

One application for the invention is in double-glazing systems for mounting an additional glazing skin onto an existing single glazed structure.

U.S. Patent No. 4328649 discloses a two-part device for use in mounting plastic sheets on roofs or walls of greenhouses comprising a first part adapted to be fixedly secured to the greenhouse and a second part which is slidably engageable with the first part. The first part has a sharpened head portion which is used to pierce a portion of the sheet which is then held in place by slidably engaging the second part with the first part until a tight clamping fit between the two parts is achieved. A plurality of the devices spaced around the periphery of the sheet are used. The device does not aid in tensioning the sheet and has the added disadvantage that piercing, and therefore weakening, of the sheet is involved.

U.K. Patent Application No. 2060752A relates to means for securing auxiliary glazing in the form of a flexible sheet to greenhouses comprising a plurality of spacer members fixed along a rigid strut of the greenhouse and a like plurality of retaining members each configured for engagement with a spacer member. The spacer members each terminate in a projection around which a portion of the sheet to be attached can be wrapped and held in place by push fitting of a cap-like retaining member onto the spacer member. Alternatively, the spacer member may be formed with a recess and the retaining member formed with a complementarily shaped button for location in the recess. These arrangements does not provide for controlled tensioning of the sheet during attachment and can cause undesirable bunching and/or stressing of portions of the sheet material.

Many other proposals have in the past been put forward for the conversion of single glazed units, in for example greenhouses, into double glazed units. Most of these, however, involve complex arrangements which are both expensive to produce and difficult to erect.

The present invention provides an extremely simple device which allows a sheet of material, such as a second glazing skin, to be quickly and easily attached to a framework in a greenhouse or elsewhere. The invention is not intended solely for use in the double-glazing of greenhouses but also offers benefits in any situation where it is desired to mount and tension sheet material on a frame.

According to one aspect of the invention, there is provided a fastening device for attaching a sheet of flexible material to a support and comprising a first part mountable on the support and a second part engageable with the first part characterised in that the second part is attachable to the sheet of material and is configured so as to be movable relative to the first part when they are engaged, and in that the first part is adapted to move relative to the support whereby a force applied to the two engaged parts moving them in one direction relative to the support causes the second part to move relative to the first part generally transversely with respect to said one direction.

Preferably, the first part is adapted to move in one direction and to resist movement in an opposite direction relative to the support.

The second part may be movable obliquely with respect to said one direction relative to the first part when the two parts are engaged.

According to another aspect of the present invention we provide a method of fastening a sheet of material to a support using two of the fastening devices defined above, comprising the following steps:

mounting the first parts of the two fastening devices on the support so that the two first parts are arranged so as to be movable relative to the support generally parallel to one another;

attaching the two second parts to the sheet of material;

engaging the two second parts with the two first parts with the sheet loosely supported between the two second parts; and

moving the first parts generally parallel to one another so as to tension the sheet both parallel to and transversely of the direction of movement of the first parts; and

causing the first parts to be fixed relative to the support when adequate tensioning of the sheet is obtained.

In one form, the invention features a clip which is engageable with an elongate frame member so as to be slidable along the frame member and which has at least one projection directed so as to grip a surface of the member to prevent sliding when a longitudinal force is applied to the clip in one direction, and a sheet connecting member engageable with and displaceable along an oblique guide on the clip.

To stretch a sheet of material between two frame members by means of the invention, four of the above fastening devices are preferably employed as follows: The first halves of two of the fastening devices are mounted back to back on one of the frame members so that they are freely slidable away from one another but resist sliding towards one another. The first halves of the other two fastening devices are mounted in a similar manner on the second frame member. The second halves of the four fastening devices are attached to the sheet of material at the four corners of a rectangle and, with the sheet loosely supported between them, are engaged with the first halves. Then, the first halves are pushed away from each other along the frame members to tension the sheet both parallel to and transversely of the frame members.

Consequently, the invention offers a very simple and effective sheet mounting and tensioning system.

The first half of the fastening device according to one embodiment of the invention may be a simple clip, for example a clip of spring steel, having a pair of legs, which are resiliently engageable either over an elongate formation on the support or within a groove in the support.

The first half of the fastening device according to another embodiment of the invention may be a locking clip having a key element, which is lockable within a groove in the support, and one or more spade portions for gripping a surface of the support. For example, the key element of the clip may be designed to be freely insertable into the groove in the support when the two parts have a particular relative orientation and to lock within the groove when the clip is rotated through 90° relative to the support.

Preferably, one of the two parts is provided with a guide edge for guiding the relative movement of the two parts when they are engaged. The guide edge may be straight and inclined relative to said one direction. Alternatively, the guide edge may be curved.

Preferably, the first part is formed with a guide edge over which the second part of the device is arranged to hook, and this edge is positioned and/or contoured to provide the generally transverse force on the second part of the device.

Advantageously, the first part of the fastening device is symmetrical about a central longitudinal plane so that it can receive a pair of the second parts and provide a mounting element for two sheets of material. In this case, the guide edge may be V-shaped or C-shaped, for example.

In one embodiment of the invention, the second part of the fastening device is designed to have the sheet of material adhered thereto.

In this case, the second part may be a bar having a hook portion engageable over a guide edge on the first part, and the sheet of material may be glued to the bar in use. The second part may be symmetrical about a central plane, so that it can be used in at least two orientations in relation to the support.

and it may then have two hook portions, only one of which will be engaged over a guide edge of the first part in use.  For example, the bar of the second part may have a respective hook portion at each end, with a lug inbetween them for locating purposes.

An alternative embodiment features a second part in the form of a clasp for gripping the sheet of material.

Advantageously, the clasp comprises a support around which the sheet of material can be wrapped, and means co-operating with the support so as to hold the sheet of material in place.  The holding means may provide a gripping or a wedging action to hold the sheet of material in place.

One of these two components preferably has a hook for engaging the first part of the fastening device of the present invention.

Various possible features may individually serve to hold, or alternatively contribute to holding, a sheet in the clasp;

According to one such feature, one of the support portion comprises a channel with an inturned lip along one edge, and the other component is designed to wedge in or around the channel by snap engagement. The snap engagement may be by snapping a portion of this other component behind the in-turned lip. By wrapping the sheet around the channel of the respective component, a firm grip on the sheet can be obtained to hold it in use.

Alternatively or as well, one of the support portion and the holding means comprises an edge portion over which the sheet can be folded and the other component is formed with a lug defining a recess into which the edge portion can be wedged or otherwise force-fitted. Advantageously, in this instance, means, for example as indicated in the previous paragraph, are provided for resisting separation of the two components in a direction tending to withdraw the edge portion from the recess.

A further possibility is to form one component as a plate portion with upstanding side walls which converge towards one another such that a corner of a sheet of material can be wrapped over a front edge of the plate portion and over the two side walls, and to form the other component as a member having converging sides which can wedge against the side walls of the first component.  In this instance, again, it is desirable to provide means for preventing separation of the two components in a direction permitting release of the sheet of material.

In one embodiment of clasp described below, one component is formed as a plate portion having converging side walls as just mentioned and the other component has converging sides, but such sides do not actually wedge against the side walls in use for reasons which will become apparent.  Nevertheless, wedging could be achieved in this way and is within the scope of the invention.

In a preferred version of the invention, both halves of the fastening device comprise components cut and bent from sheet metal for ease and economy of manufacture.

According to another aspect of the invention, there is provided a sheet mounting and tensioning system characterised by a support, a pair of movable parts mounted on the support, a sheet of material carrying two connecting members each engageable

- 11 -

0166833

with a respective movable part and arranged to co-operate with the movable parts such that, when the movable parts are moved relative to the support and generally parallel to one another, the sheet is tensioned both in the direction of movement of the parts and in a direction generally transverse to the direction of movement.

In a particular embodiment, the system comprises a pair of elongate frame members, two movable parts on each member which are arranged to be freely movable away from one another and to resist movement towards one another, a sheet of material carrying four connecting members each engageable with a respective movable part and arranged to co-operate with the movable parts such that when the movable parts on each frame member are urged apart the sheet is tensioned both in a direction parallel to and in a direction transversely of the frame members.

An additional aspect of the invention features a clasp for attaching a sheet of material to an article characterised by first and second components which are configured so as to be manually fittable together to grip a portion of the sheet therebetween.

The clasp may have application for attaching sheets of material directly to items other than another part of the fastening device of the invention.

Optionally, the first component is in the form of a bar adapted to co-operate with a plurality of the second components spaced along the length of the bar.

In this instance, an elongate bar support may be provided for wrapping a sheet of material around, and at least one member may be provided for co-operating with the elongate bar support so as to provide a gripping or a wedging action to hold the sheet of material in place. The or each co-operating member may be suitably formed, as with a hook or an eye, to engage an item to which the sheet of material is to be attached.

The invention is described further, by way of example, with reference to the accompanying drawings, in which:

Figure 1 is a diagrammatic perspective view of a first sheet supporting member of a fastening device according to the invention;

Figure 2 is a diagrammatic perspective view of a first clip of a fastening device according to the invention;

Figure 3 is a diagrammatic perspective view showing the member of Figure 1 and the clip of Figure 2 in combination in use;

Figure 4 is an exploded view of a second sheet supporting member of a fastening device according to the invention;

Figure 5 is a sectional view through the second sheet supporting member in an assembled condition;

Figure 6 is a diagrammatic perspective view illustrating the second sheet supporting member engaging a sheet of material;

Figure 7 is a diagrammatic perspective view showing the member of Figures 4 to 6 and the clip of Figure 2 in combination in use;

Figure 8 is an exploded view of a third sheet supporting member of a fastening device according to the invention;

Figure 9 is a sectional view through the third sheet supporting member in an assembled condition;

Figure 10 is a diagrammatic perspective view of a second clip of a fastening device according to the invention;

Figures 11 to 13 show how the second clip is mounted on an elongate frame member for use;

Figure 14 is a diagrammatic perspective view showing the member of Figures 8 and 9 and the clip of Figures 10 to 13 in combination in use; and

Figure 15 is a diagrammatic view showing a modification of the member of Figures 8 and 9 for use in an alternative application.

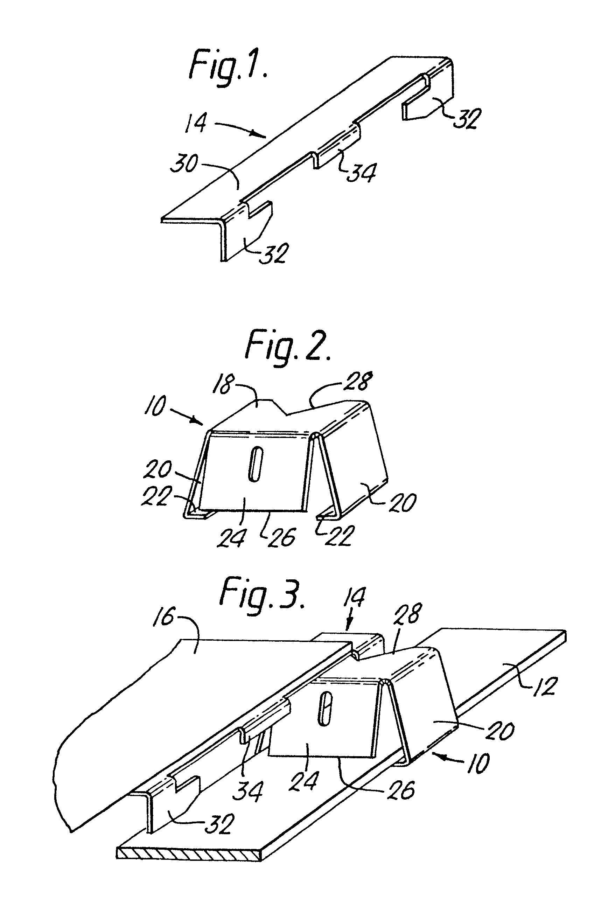

Referring to Figures 1 to 3 of the drawings, these illustrate a fastening device embodying the invention for mounting and tensioning sheet material on a framework. The fastening device has a first half 10 shown in Figure 2 in the form of a clip which is mountable on an elongate frame member 12 of the framework as indicated in Figure 3, and a second half 14 shown in Figure 1 providing a connecting element which hooks over the clip 10 in a manner illustrated in Figure 3 for supporting a sheet 16 of flexible material on the frame member 12.

The clip 10 has a central body portion 18 with a pair of inclined spring legs 20 extending from opposed sides of the portion 18. The legs 20 have inturned feet 22 so that they can snap over and engage behind edges of the frame member 12. A spade portion 24 extends at an angle from a rear end of the central body portion 18 and is slightly rearwardly inclined so that when the clip 10 is snapped on to the frame member 12 the spade portion 24 rests lightly on a facing surface of the member 12. This arrangement allows the clip 10 to slide freely forwardly along the member 12 but presents a substantial resistance to movement rearwardly because the lower edge 26 of the spade portion 24 then bites into the surface of the member 12 to prevent movement. At the front, the central body portion 18 is formed with an inset guide edge 28, which in this instance is V-shaped. The purpose of this is explained below. The entire clip 10 is cut and bent from sheet metal.

The element 14 is in the form of a substantially flat bar 30 on which the sheet 16 is preferably glued in use.  Two hook formations 32 and a lug formation 34 are provided along one side of the bar 30, all angled away from the plane of the bar.  The hook formations 32 face one another at each end of the bar 30, and the lug formation 34 is arranged centrally between them.  The element 14 is also cut and bent from sheet metal.

Referring to Figure 3, it can be seen that the element 14 is engageable with the clip 10 by hooking either one of the formations 32 over the clip edge 28.  In the absence of any external influence, a substantial amount of free play between the two parts is possible in this condition and the position of the element 14 relative to the clip 10 can be varied by displacing the respective hook formation 32 along the edge 28.  Since each half of the edge 28 is inclined relative to the longitudinal direction of the clip 10, such displacement results in the element 14 moving both longitudinally and laterally of the clip 10.  The lug formation 34 of the element 14 engages the clip spade portion 24 and acts as a stop preventing continued lateral movement of the element

- 16 -                    **0166833**

14 away from the centre of the clip 10 when the formation 32 is right at one side of the central body portion 18.  It will be understood that when a force is applied between the element 14 and the clip 10 tending to urge the respective hook formation 32 longitudinally of the clip 10 against the edge 28, the action of this edge on the element 14 will also urge the element 14 transversely of the clip 10 to bring the hook formation 32 into the corner of the V provided by the edge 28.

In use, the device is employed as follows:

A pair of the clips 10 are first mounted back to back on one frame member 12 somewhat closer together than the length of the sheet 16 which is to be supported between them.  Another pair of the clips 10 are also mounted on a second, parallel, frame member 12 in a similar fashion.

Next, four of the elements 14 are glued or otherwise attached to the sheet 16 at or near its corners.

The elements 14 are then hooked loosely over the clips 10, which is readily possible since the

two clips 10 on each frame member 12 are closer together than the two associated elements 14 in the tensioned condition of the sheet 16 and since a substantial amount of lateral play is also permitted at this time between each element and the associated clip.

Once the sheet 16 is loosely suspended from all the clips 10, the two clips on each frame member 12 are forced apart and, by virtue of the action of the edges 28 on the elements 14, this has the effect of tensioning the sheet both in the longitudinal and in the transverse directions.

When the sheet 16 is fully tensioned, the clips 10 maintain it in this condition because the spade portions 24 then grip the frame members 12 to prevent any slackening of the sheet 16 resulting from the clips 10 moving along the frame members 12 towards one another.

An effective tensioning action is thus obtained in a simple and inexpensive manner.

As shown in Figure 3, the element 14 uses only one side of the clip 10, which is symmetrical about a central longitudinal plane.  Another element 14 can, therefore, be employed on the other side of the clip 10 to support another sheet 16. The elements 14 are also symmetrical, but about a central transverse plane, so that they can be used either way round, which makes for ease of manufacture.

In a greenhouse double-glazing system employing the fastening device shown in Figures 1 to 3, the frame members 12 may be part of the framework of the greenhouse supporting its existing glazing.  The sheets 16 may be formed from MELINEX and when stretched in place advantageously have their side edges tucked over the outer sides of the associated elements 14 towards the frame members 12 to provide a trap for air between the two glazing skins for insulating purposes.

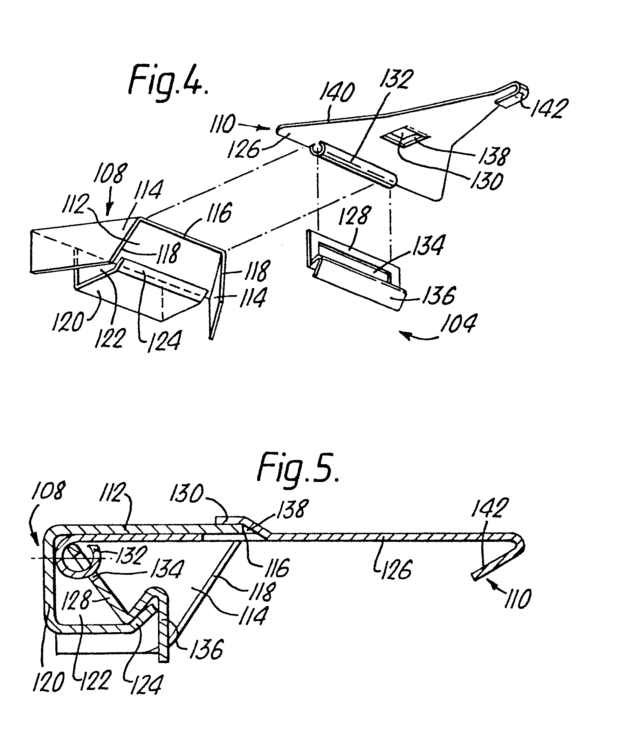

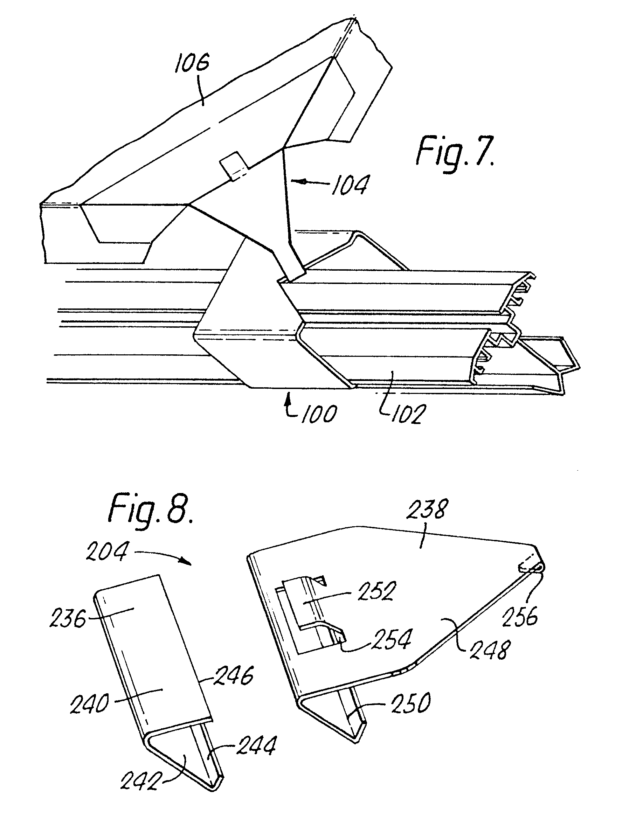

Referring now to Figures 4 to 7 of the drawings, a further embodiment of fastening device will be described.  This further fastening device has a first half 100 as before in the form of a clip which is mountable on an elongate frame member 102 of a framework as already described, and a second half 104, best seen in Figures 4 to 6, providing a clasp for gripping a sheet 106 of flexible material. The clasp 104 hooks over the clip 100 in the manner illustrated in Figure 7 for supporting the sheet 106 of flexible material on the frame member 102.

The clip 100 is identical with the clip 10 shown in Figure 2 and need not be described.

The clasp 104 comprises two components: a support element 108 over which a corner of the sheet 106 is wrapped in use; and a locking element 110 which locks with the element 108 to grip the sheet 106.

As illustrated, the support element 108, which is cut and bent from sheet metal, comprises a plate portion 112 having upstanding side walls 114. These converge towards a front edge 116 of the plate portion 112 and have front edges 118 gently inclined relative to the plane of the plate portion 112. At the rear of the support element 108, an angled portion 120 defines with the plate portion 112 a channel 122. The front of the angled portion 120 is bent to form an in-turned lip 124.

In order to wrap a corner of the sheet 106 of flexible material around the support element 108, the element 108 is first placed on the sheet so that the plate portion 112 lies flat against the sheet facing and a little distance in from the corner and so that the side walls 114 are spaced inwardly from and lie parallel to adjacent edges of the sheet. The corner of the sheet 106 is then folded over the front edge 116 of the support element 108 until it lies flat against the exposed face of the plate portion 112, its tip being tucked into and around the channel 122. In the course of this folding operation, the edges of the sheet 106 automatically lift towards the side walls 114 of the element 108 as side regions of the folded corner of the sheet 106 become folded over the front gently inclined edges 118 of the side walls 114. The folded corner not only lies against the exposed face of the plate portion 112 but also has these side regions lying adjacent and facing the inner surfaces of the walls 114.

The locking element 110 is designed to hold the corner of the sheet 106 in this condition.

For this purpose, the locking element 110

0166833

comprises a plate body 126 provided with a hinged locking strip 128 as both latch means and first sheet engaging means and formed with a lug 130 as second sheet engaging means. The plate body 126 and the locking strip 128 are both cut and bent from sheet metal.

The locking strip 128 is hinged to the plate body 126 by the engagement of a curled rear edge portion 132 of the body 126 within a slot 134 in the strip 128. When the plate body 126 is positioned in relation to the support element 108 with its curled rear edge portion 132 seated in the base of the channel 122, the locking strip 128 can be snapped behind the in-turned lip 124 of the support element 108 as illustrated in Figure 5 to lock the two elements together. This wedges the curled rear edge portion 132 of the plate body in a corner of the channel 122, thereby wedging in place the section of the sheet 106 which is tucked around the channel 122.

Figures 4 and 5 also show that the locking strip 128 is formed with a bent tongue 136 which projects beyond the lip 124 in the locked condition of the strip 128. The tongue 136 is

- 24 -

0166833

not essential but it provides a means for
disengaging the strip 128 from the in-turned
lip 124, which may be useful if for any reason

it is desired to release the sheet 106 from the fastening device.

Turning to the lug 130, this is cut out and offset from the plate body 126 to provide a recess 138 for receiving the front edge 116 of the support element 108. The lug 130 is positioned so that, when the locking strip 128 is engaged behind the lip 124, the front of the plate portion 112 is wedged between the lug 130 and the remainder of the plate body 126 as illustrated in Figure 5. Accordingly, the section of the sheet 106 folded over the edge 116 is gripped firmly by the lug 130 and the plate body 126.

A further function of the lug 130 is to locate the plate portion 112 of the support element 108 flat against the plate body 126 of the locking element 110 and prevent rotation of one relative to the other around the curled rear edge portion 132 of the locking element 110 in response to tensioning forces applied to the sheet 106.

It will be appreciated that the lug 130 may be shaped so that instead of providing a wedging action on the front of the plate portion 112, it simply applies a constant frictional gripping force when the front of the plate portion 112 is inserted between it and the plate body 126. Alternatively, if the lug 130 is not required to grip the sheet 106 in any way and is only required to serve a locating function, it may be positioned to receive the front of the plate portion 112 quite loosely.

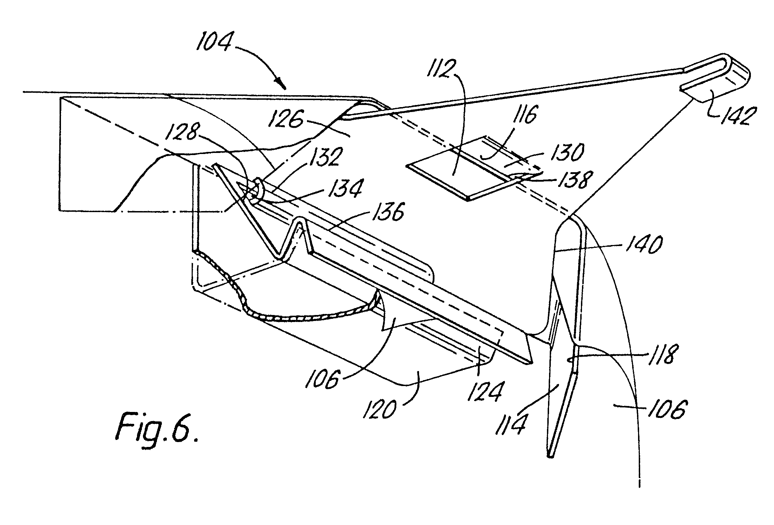

Additionally, the plate body 126 has sides 140 which are arranged in approximately the same relationship to one another as, but somewhat more closely spaced than, the side walls 114 of the support element 108. Consequently, when the locking element 110 is engaged with the support element 108, its sides 140 lie adjacent the bases of the side walls 114 (see Figure 6) and serve to hold the side regions of the folded corner of the sheet 106 close to the inner surfaces of the side walls 114. This maintains the folded corner taut over the front edges 118 of the side walls 114 to support the edges of the sheet 106 in their lifted condition, which is desirable for reasons given below. However, the sides 140 are nevertheless spaced inwardly a little way from the side walls 114, which permits relative displacement of the elements 108, 110 in the front-to-rear direction when engaging the two elements together.

The way in which the locking element 110 is engaged with the support element 108 is as follows:

Firstly, the plate body 126 of the locking element 110 is positioned above and more or less at right angles to the plate portion 112 of the support element 108.  In this condition, the plate body 126 is lowered vertically against the plate portion 112 and is then rotated forwardly to bring the two into overlying relationship. Next, if necessary, the plate body 126 is displaced forwardly until a rear edge of the lug 130 is in front of the front edge 116 of the plate portion 112. This allows the front edge 116 of the plate portion 112 to be engaged within the recess 138. Finally, the plate body 126 is shifted rearwardly to complete such engagement and insert the locking strip 128 substantially entirely into the channel 122, and the locking strip 128 is forced behind the lip 124.

This locks the two elements 108 and 110 positively together and ensures that the sheet 106 of flexible material is firmly gripped between the two.

A hook 142 is also formed at the front of the plate body 126 as illustrated for engagement with the clip 100 as illustrated in Figure 7.

The fastening device thus formed is employed in conjunction with three other such devices in the manner already described for supporting and tensioning the sheet 106 on the frame member 102 and another parallel such frame member.

When the devices are employed in a greenhouse double-glazing system, the frame members 102 may be part of the framework of the greenhouse supporting its existing glazing.  The sheets 106 may be formed from MELINEX and when stretched in place will have their edges tucked over against the side walls 114 of the support elements 108 as previously mentioned and towards the frame members 102 as illustrated in Figure 7 to provide a trap for air between the two glazing skins for insulating purposes.

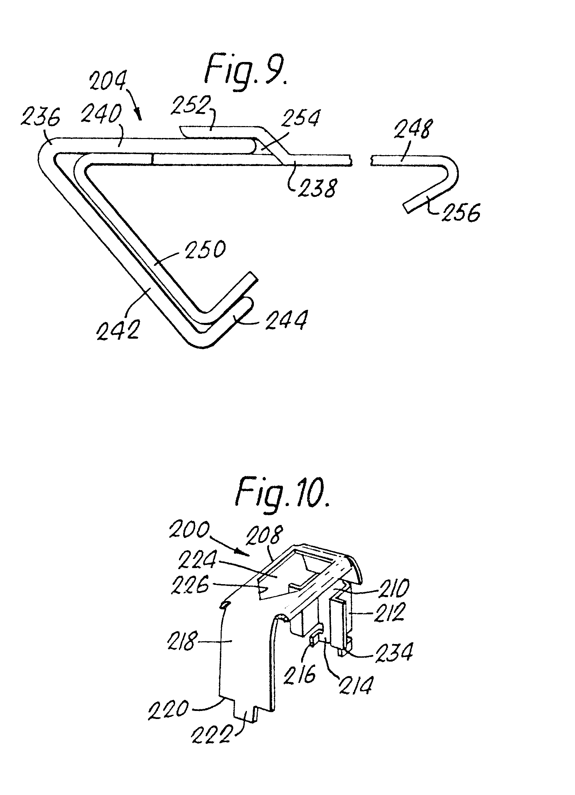

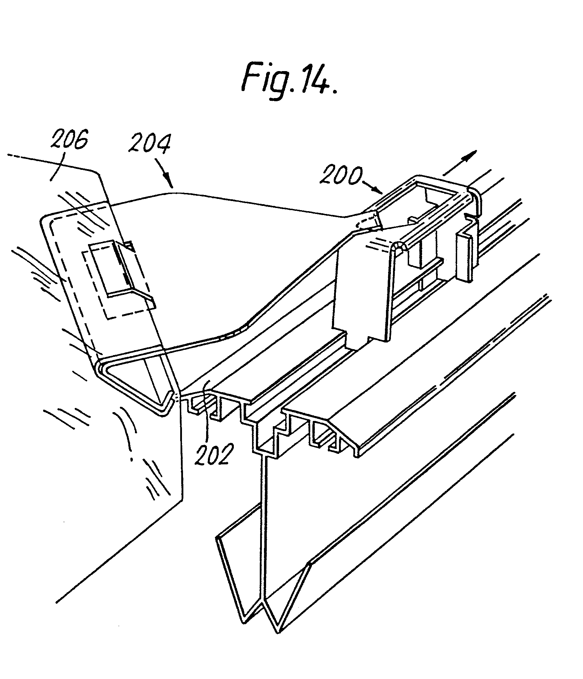

Referring now to Figures 8 to 14 of the drawings, a further embodiment of fastening device will be described.  This further fastening device has a first half 200, shown in Figures 10 to 14, in the form of a clip, which can be locked to an elongate frame member 202 of a framework, and a second half 204, best seen in Figures 8, 9 and 14, providing a clasp for gripping a sheet 206 of flexible material.  The clasp 204 hooks over the clip 200 in the manner illustrated in Figure 14 for supporting the sheet 206 of flexible material on the frame member 202.

The clip 200 has a central body portion 208. A locking portion 210 extends downwardly from a front end of the central body portion 208 at approximately 90° relative to the central body portion. The locking portion 210 includes a pair of side walls 212, which extend rearwardly and then outwardly as illustrated in Figure 10, and a key element 214, which is spaced below the side walls 212 and serves for locking the clip 200 to the frame member 202. The key element 214 is provided with a pair of laterally extending arms 216, which are bent rearwardly at their ends partially for strengthening purposes and partially for a reason given below. A spade portion 218 extends at an angle from a rear end of the central body portion 208 and is slightly rearwardly inclined. A tongue 222 is formed at the lower edge 220 of the spade portion 218 for location of the clip 200 as explained below. The central body portion 208 contains an opening 224, and this opening defines a V-shaped guide edge 226 having the same purpose as described previously. The entire clip 200 is cut and bent from sheet metal.

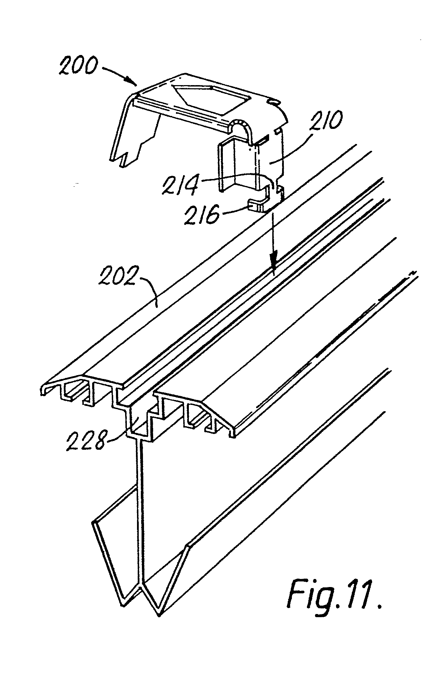

Referring to Figures 11 to 13, the way in which the clip 200 is locked to the frame member 202 will be described.

**0166833**

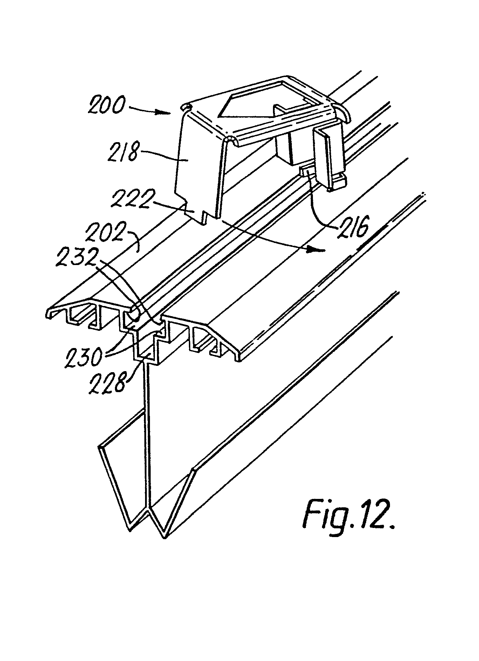

Firstly, the clip 200 is turned sideways relative to the frame member 202. In this condition, the key element 214 is freely insertable into a groove 228 within the frame member 202 as indicated in Figure 11. When the key element 214 has been inserted into the groove 228, the clip 200 is rotated through 90° as shown in Figure 12. This action causes the arms 216 to engage in corresponding recesses 230 at the side of the groove 228 and thereby locks the arms 216 behind respective internal shoulders 232 defining the upper limits of the recesses 230. This locks the clip 200 against withdrawal vertically from the groove 228.

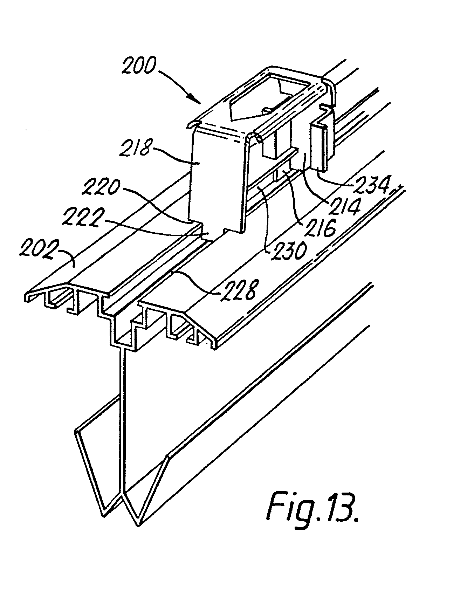

In the course of the rotation to lock the key element 214 in the groove 228, the clip 200 flexes to permit the spade portion 218 and tongue 222 to travel over the upper surface of the member 202 until the tongue 222 faces the groove 228. The tongue 222 then drops into the groove 228 and thereafter locates the clip against further rotation which would tend to disengage the key element 214 from the groove 228. This condition is illustrated in Figure 13.

Once the clip 200 has been locked to the frame member 202 as shown in Figure 13, the lower edges 234 of the side walls 212 of the locking portion 210 rest lightly on the facing surface of the member 202. The lower edge 220 of the spade portion 218 may or may not also rest lightly on the facing surface of the member 202. The clip 200 then exhibits a substantial resistance to movement rearwardly along the frame member 202 since the edges 234 at least, and possibly also the edge 220, bite into the surface of the member 202 to prevent such movement. However, the clip 200 can be pushed freely forwardly along the frame member 202, the arms 216 serving to permit a limited degree of forward tilting of the clip 200 to allow the edges 234 of the side walls 212 and, if necessary, the edge 220 of the spade portion 218 to lift away from the frame member 202 to facilitate such movement. At the same time, the arms 216 prevent excessive tilting of the clip 200 which might encourage disengagement of the clip from the frame member 202 during forwards movement.

The clasp 204 is similar in many respects to the clasp 104 shown in Figures 4 to 7. In particular, the clasp comprises two components:
A support element 236 over which a corner of the
sheet 206 is wrapped in use; and a locking element
238 which locks with the element 236 to grip the
sheet 206.

As illustrated in Figures 8 and 9, the support
element 236, which is cut and bent from sheet metal,
basically comprises a channel member formed by
a support wall 240, an inclined wall 242 connected
to the support wall 240 and forming an acute angle
therewith, and an inturned lip 244 at the free
edge of the wall 242.

In use, a corner of the sheet 206 of flexible
material is wrapped around the support element 236
by placing the element 236 on the sheet so that
the support wall 240 lies flat against the sheet
facing and a little distance in from the corner
and by folding the corner over the front edge
246 of the support wall 240 and tucking the tip of
the corner into the channel provided by the element
236.

The locking element 238 is designed to hold the corner of the sheet 206 in this condition.

For this purpose, the locking element 238 comprises a plate body 248 provided with a rear locking portion 250 as both latch means and first sheet engaging means and formed with a lug 252 as second sheet engaging means.  The plate body 248 and the rear locking portion 250 are cut and bent as a unit from sheet metal.

The locking portion 250 is rigidly joined to the plate portion 248 at an acute angle such that the locking portion 250 can be snapped behind the inturned lip 244 of the support element 236 as illustrated in Figure 9 to lock the two elements together.  This wedges the rear of the locking element 238 in the corner of the channel provided by the support element 236, thereby wedging in place the section of the sheet 206 which is tucked around the channel.

Although not shown, the locking portion 250 may be formed with a bent tongue arranged to project beyond the lip 244 in the locked condition of the locking element 238. Such a tongue provides a means for disengaging the locking portion 250 from the inturned lip 244, which may be useful if for any reason it is desired to release the sheet 206 from the fastening device.

Turning to the lug 252, this is cut out and offset from the plate body 248 to provide a recess 254 for receiving the front edge 246 of the support wall 240 of the support element 236. The lug 252 is positioned so that, when the locking portion 250 is engaged behind the lip 244, the front of the support wall 240 is frictionally gripped between the lug 252 and the remainder of the plate body 248 as illustrated in Figure 9. Accordingly, the section of the sheet 206 folded over the edge 246 is gripped firmly by the lug 252 of the plate body 248.

As in the previous embodiment, the lug 252 assists in locating the support element 236 in the proper orientation relative to the locking element 238 to prevent rotation of one relative to the other when tensioning forces are applied to the sheet 206 of flexible material.

It will be appreciated that the lug 252 may be shaped so that instead of applying a constant frictional gripping force to the support wall 240 when this is inserted between the lug and the plate body 248, it provides a wedging action as in the previous embodiment.

A hook 256 is also formed at the front of the plate body 248 for engagement with the clip 200 as illustrated in Figure 14.

The fastening device thus formed is employed in conjunction with three other such devices in the manner already described for supporting and tensioning the sheet 206 on the frame member 202 and another parallel such frame member.

As before, when the devices are employed in a greenhouse double-glazing system, the frame members 202 may be part of the framework of the greenhouse supporting its existing glazing. The sheets 206

0166833

may be formed from MELINEX and when stretched in place will have their edges tucked over the sides of the locking elements 238 and support elements 236 and towards the frame members 202 as illustrated in Figure 14 to provide a trap for air between the two glazing skins for insulating purposes.

Various modifications to the fastening device are possible within the scope of the invention.

For example, the feet 22 on the spring legs 20 of the clip 10 may be turned outwardly and the spring legs 20 may be arranged to engage within a groove in the frame member 12.

The unitary spade portion 24, 218 illustrated may be replaced by two or more smaller spade portions or tongues, or even by a row of teeth or just one prong.

Also, the contour of the edge 28,226 may be modified so that it is curved in parts or constitutes a single continuous curve.

- 37 -

0166833

The hook formation 32 at one end of the element 14 may be omitted, as may be the locating lug formation 34 in the centre of the element 14.

The clasp 104 may be modified by causing the sides 140 of the locking element 110 to wedge against the side walls 114 of the support element 108 in the engaged condition of the two parts and by substituting for the lug 130 an alternative arrangement for preventing relative rotation of the two elements under forces exerted by the tensioned sheet 106 in use. In this case, the locking strip 128 and the means providing the overhanging lip 124 might be omitted altogether, since the wedging action between the sides 140 and the side walls 114 may serve both to grip the sheet 106 and to lock the two elements together.

Another possibility in relation to the clasps 104,204 is to rely only on the lug 130,252 for gripping the sheet 106,206 and to provide an alternative latch arrangement simply for locking the elements 108,236 and 110,238 together without also gripping the sheet 106,206.

In an alternative modification of the clasp 104, the sides 140 of the locking element 110 are formed parallel to one another, and the front edges 118 of the side walls 114 are steeply angled relative to the plate portion 112. In use, the side regions of the folded corner of the sheet 106 are then stretched tightly between the front edges 118 and the plate body 126 to provide the desired lifting action on the edges of the sheet 106 to create an air trap for insulation when the device is to be used in a greenhouse for example.

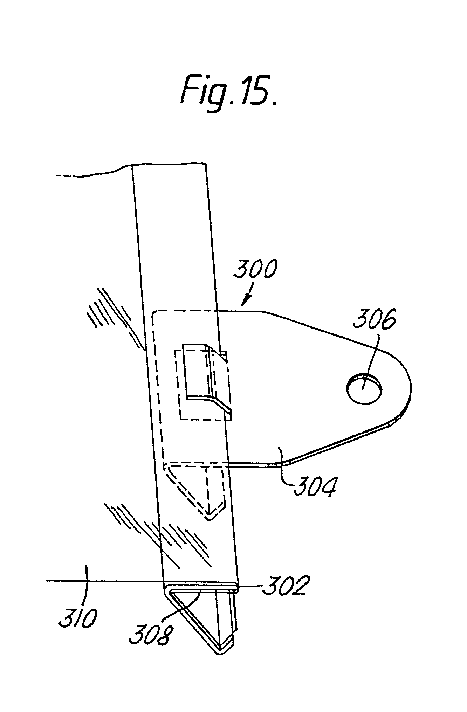

A further modification of the invention is shown in Figure 15, wherein a clasp 300 generally similar to the clasp 204 is employed for attaching a sheet of material directly to a hook on a wall or similar location rather than to a clip as previously described.

Like the clasp 204, the clasp 300 has a support element 302 and a locking element 304. The support element 302 is identical with the support element 236 except in that it is formed as an elongate bar for receiving a plurality of the locking elements rather than a single one; and the locking element 304 is identical with the locking element 238 except in that the hook 256 is omitted and is replaced with an eye 308. A full description of the clasp 304 is not, therefore, necessary.

In use, the support wall 308 of the support element 302 is placed flat against a sheet 310 of flexible material so that it is parallel to but inset from one edge of the sheet 310 of flexible material. The sheet is then wrapped over the front edge of the support wall 308 and is tucked into the channel as before. Following this, a plurality of the locking elements 304 are snapped onto the support element 302 at spaced locations to ensure that the sheet 310 is securely held in place. The locking elements 304 may be fitted over hooks at suitable attachment locations.

Although sheet metal has been mentioned as the material from which the described parts are formed, they could equally well be made from plastics.

The parts described are all simple and inexpensive to make and offer fastening devices for securing sheet material to a framework in an extremely quick and easy fashion.

CLAIMS

1. A fastening device for attaching a sheet (16) of flexible material to a support (12) and comprising a first part (10) mountable on the support (12) and a second part (14) engageable with the first part (10) characterised in that the second part (14) is attachable to the sheet (16) of material and is configured so as to be movable relative to the first part (10) when they are engaged, and in that the first part (10) is adapted to move relative to the support (12) whereby a force applied to the two engaged parts (10,14) moving them in one direction relative to the support (12) causes the second part (14) to move relative to the first part (10) generally transversely with respect to said one direction.

2. A fastening device according to claim 1 characterised in that the first part (10) is adapted to move in one direction and to resist movement in an opposite direction relative to the support (12).

3. A fastening device according to claim 1 of claim 2 characterised in that the second part (14) is movable obliquely with respect to said one direction relative to the first part (10) when the two parts (10,14) are engaged.

4. A fastening device according to any preceding claim characterised in that one of the two parts (10,14) is provided with a guide edge (28) for guiding the relative movement of the two parts (10,14) when they are engaged.

5. A fastening device according to claim 4 characterised in that the guide edge (28) is straight and inclined relative to said one direction.

6. A fastener according to claim 4 characterised in that the guide edge (28) is curved.

7. A fastening device according to any of claims 4 to 6 characterised in that the first part (10) is formed with the guide edge (28) over which the second part (14) of the device is arranged to hook.

8. A fastening device according to any preceding claim characterised in that the first part (10) is symmetrical about a central longitudinal plane so that it can receive a pair of the second parts (14) thereby providing a mounting element for two sheets (16) of material.

9. A fastening device according to any of claims 2 to 8 characterised in that the first part (10) comprises means for slidably engaging the support (12) and means arranged to grip a surface of the support (12) thereby to prevent sliding when a force is applied to the first part (10) in said opposite direction.

10. A fastening device according to claim 9 characterised in that the first part (10) comprises one or more spade portions (24) for gripping a surface of the support (12).

11. A fastening device according to claim 9 or claim 10 characterised in that the first part (10) comprises a clip having a pair of legs (20) which are resiliently engageable either over an elongate formation on the support (12) or within a groove in the support (12).

12. A fastening device according to claim 9 or claim 10 characterised in that the first part (10) comprises a locking clip (200) having a key element (214) which is lockable within a groove (228) in the support (12).

13. A fastening device according to any preceding claim characterised in that the second part (14) is designed to have the sheet (16) of material adhered thereto.

14. A fastening device according to claim 13 characterised in that the second part (14) is in the form of a bar (30) having a hook portion (32) engageable with the first part (10).

15. A fastening device according to any preceding claim characterised in that the second part (14) is symmetrical about a central longitudinal plane so that it can be used in at least two orientations in relation to the support (12).

16. A fastening device according to any preceding claim characterised in that the second part (14) is in theform of a clasp (104) for gripping the sheet (16) of material.

17. A fastening device according to claim 16 characterised in that the clasp (104) comprises a support portion (108) around which a sheet (16) of material can be wrapped and means (110) co-operating with the support portion (108) so as to hold the sheet (16) of material in place.

18. A fastening device according to claim 17 characterised in that one of the supporting portions (108) and the holding means (110) comprises a channel with an inturned lip along one edge, and the other
component is designed to wedge in or around the wedge
in or around the channel (124) by snap engagement.

19.    A fastening device according to any of claims 16
to 18 characterised in that one of the support portion
(108) and the holding means (110) comprises an edge
portion (116) over which the sheet (16) can be
folded and the other component is formed with a lug
(130) defining a recess (138) into which the edge
portion (116) can be wedged or otherwise force-fitted.


20.    A fastener according to claim 19 characterised
in that means (128) are provided for resisting
separation of the support portion (108) and holding
means (110) in a direction tending to withdraw the edge
portion (116) from the recess (138).


21.    A fastening device according to claim 17
characterised in that the support portion (108) comprises
a plate portion (112) with upstanding side walls (114)
which converge towards one another so that a corner of a
sheet (16) of material can be wrapped over a front edge
(116) of the place portion (112) and over the two side
walls (114) and the holding means (110) comprises
converging sides (140) which can wedge against the side
walls (114) of the support portion (108).


22.    A clasp according to any of claims 16 to 21.

23. A sheet mounting and tensioning system characterised by a support (12), a pair of movable parts (10) mounted on the support (12), a sheet (16) of material carrying two connecting members (14) each engageable with a respective movable part (10) and arranged to co-operate with the movable parts (10) such that, when the movable parts (10) are moved relative to the support (12) and generally parallel to one another, the sheet (16) is tensioned both in the direction of movement of the parts (10) and in a direction generally transverse to the direction of movement.

24. A sheet mounting and tensioning system according to claim 23 characterised in that the movable parts (10) are arranged so as to be freely movable relative to the support (12) in one direction and to resist movement in an opposite direction.

25. A method of fastening a sheet (16) of material to a support (12) using two of the fastening devices according to claim 1 comprising the following steps:

mounting the first parts (10) of the two fastening devices on the support (12) so that the two first parts (10) are arranged so as to be movable relative to the support (12) generally parallel to one another;

attaching the two second parts (14) to the sheet (16) of material;

engaging the two second parts (14) with the two first parts (10) with the sheet (16) loosely supported between the two second parts (14) and;

moving the first parts (10) generally parallel to one another so as to tension the sheet (16) both parallel to and transversely of the direction of movement of the first parts (10); and

causing the first parts )10) to be fixed relative to the support (12) when adequate tensioning of the sheet (16) is obtained.

26. A clasp (204) for attaching a sheet (206) of material to an article characterised by first (236) and second (238) components which are configured so as to be manually fittable together to grip a portion of the sheet (206) therebetween.

27. A clasp (204) according to claim 26 characterised in that the first component (236) is in the form of a bar adapted to co-operate with a plurality of the second components (238) spaced along the length of the bar.

0166833

Fig.1.

Fig.2.

Fig.3.

Fig.4.

Fig.5.

0166833

Fig.6.

Fig.7.

Fig.8.

Fig. 9.

Fig. 10.

Fig.11.

*Fig.12.*

Fig.13.

# Fig.14.

Fig.15.

## EUROPEAN SEARCH REPORT

European Patent
Office

Application number

EP  84 30 8345

## DOCUMENTS CONSIDERED TO BE RELEVANT

| Category | Citation of document with indication  where appropriate, of relevant passages | Relevant to claim | CLASSIFICATION OF THE APPLICATION (Int Cl 4) |
|---|---|---|---|
| D,A | US-A-4 328 649  (SIEVE)<br>* Column  5, line 30 - column 7, line 55; figures 1-19 * | 1 | A 01 G    9/14<br>F 16 B    5/06<br>E 06 B    3/28 |
| D,A | GB-A-2 060 752  (WOODAGE)<br>* Page 1, line 82 - page 2, line 32; figures 1-8 * | 1 | |

TECHNICAL FIELDS
SEARCHED (Int Cl 4)

A 01 G
E 06 B
F 16 B

The present search report has been drawn up for all claims

| Place of search | Date of completion of the search | Examiner |
|---|---|---|
| THE HAGUE | 08-03-1985 | HERYGERS J.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82